# EUROPEAN PATENT APPLICATION

(11) **EP 2 882 194 A1**
(43) Date of publication of application: **10.06.2015**
(21) Application number: 13306671.2
(22) Date of filing: 05.12.2013
(51) Int. Cl.: H04N 21/41, H04N 21/441, H04N 21/442, H04N 21/422, H04N 21/466

(54) **Identification of a television viewer**

(71) Applicant: Thomson Licensing, 92130 Issy-les-Moulineaux (FR)
(72) Inventor: Legallais, Yvon, 35 576 Cesson Sévigné (FR); Gilberton, Philippe, 35 576 Cesson Sévigné (FR); Howson, Christopher, 35 576 Cesson Sévigné (FR); Gautier, Eric, 35 576 Cesson Sévigné (FR)
(74) Representative: Huchet, Anne

(57) **Abstract**

IDENTIFICATION OF A TELEVISION VIEWER

Method of identification of a television viewer from a plurality of users of a television receiver, comprising:
a) monitoring (52) at least one interaction of the television viewer with the television receiver;
b) monitoring (54) at least one contextual information relative to the at least one user from said plurality of users;
c) using (60) said interaction monitoring and contextual information monitoring results to identify the television viewer.

## Description

### FIELD OF THE INVENTION

The present invention generally relates to the field of television.
More particularly, the invention deals with the identification of a television viewer, for instance in order to offer said television viewer personalized programs relevant for him.
Thus, the invention concerns a method of identification of a television viewer. It also concerns a corresponding identification device. It further concerns an identification system and a computer program implementing the method of the invention.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

The wide range of existing television channels and associated interactive services allows to cover a very large audience. Consequently, users often have difficulties to choose the relevant television programs which provide the most interesting content for them. Thus, there is a need for a personalization of the television services provided to users.

Unfortunately, this personalization is frequently based on terminal identification rather than on the viewer himself. Since a television display is often used by multiple viewers with heterogeneous profiles, this type of personalization cannot fit to each viewer's preferences.

Some solutions exist to identify a television viewer. These solutions comprise, for instance, the use of a smart card with a dedicated optical /electrical interface or a fingerprint reader or a personal pin code or a voice or face recognition mechanism or an identification with a sensor such as a bracelet. Other solutions use a smartphone with a Bluetooth interface or a RFID (Radio Frequency IDentification) reader. All these existing solutions require an action from the user and can consequently be perceived by said user as a constraint.

There are also some solutions that infer the identity of a user from his behavior in a particular domain. For instance, a method of viewer identification has been proposed using viewing pattern discovery, for example by analyzing preferred channels and/or viewing habits, such as channel surfing. According to this solution, a viewer profile identification system, which may be installed in the headend of a television system, provides a viewing system that analyzes the content and the user actions to identify the viewer or at least some characteristics of the viewer.

This identification method based on the channel selection and zapping pattern is however often insufficient to identify a television viewer either because the current viewer does not have an easily identifiable behavior when selecting television channels, or because the watched program does not match with a unique non ambiguous user profile. Consequently, this type of solution lacks rapidity, reliability and accuracy.

### SUMMARY OF THE INVENTION

The present invention proposes a solution for improving the situation.

Accordingly, the present invention provides a method of identification of a television viewer from a plurality of users of a television receiver, comprising:
a) monitoring at least one interaction of the television viewer with the television receiver;
b) monitoring at least one contextual information relative to at least one user from said plurality of users;
c) using said interaction monitoring and contextual information monitoring results to identify the television viewer.

Here, the expression "television viewer" means the user or the group of users who is currently watching the television.

Thus, this method is not only able to take benefit from the viewer interactions with the television receiver but also to use information from the users context to provide an efficient identification.

A better identification of the user who is currently watching television can allow to provide immediately a more efficient content recommendation or to personalize a user interface or to target an advertising provided to said user.

Advantageously, the step of monitoring the interaction comprises capturing at least one action of the television viewer on at least one interface of the television receiver and/or of a device associated with said television receiver.

Preferably, the interface is a remote control or a front panel or a HDMI (High-Definition

Multimedia Interface) interface of said television receiver or of a display device associated with said television receiver.

For instance, the television receiver is a set-top box with which are associated, i.e. connected, one or more television displays.

Advantageously, a sequence of actions of the television viewer is captured.

Capturing a sequence of actions of the television viewer can permit to improve the identification.

Advantageously, the contextual information comprise information collected from at least one sensor and/or at least one user calendar.

According to an embodiment, the method further comprises monitoring external information.

Advantageously, the external information comprise information provided by an external source of information, for example from a social network or a television guide.

These information concern, for instance, television programs broadcasted on the television channel currently viewed.

Advantageously, the method further comprises building a profile of each user of the television receiver.

According to an embodiment, the method further comprises updating the profile of the identified television viewer using the monitoring results.

The invention also provides an identification device of a television viewer from a plurality of users of a television receiver, comprising :
a) a receiving module able to receive information about at least one interaction of the television viewer with the television receiver and at least one contextual information relative to at least one user from said plurality of users;
b) a recognition module able to use the received information to identify the television viewer.

According to an embodiment, the identification device is a smartphone.

According to another embodiment, the identification device is a gateway.

The invention further provides an identification system of a television viewer from a plurality of users of a television receiver, comprising :
a) an interaction collector module able to monitor at least one interaction of the television viewer with the television receiver;
b) a context module able to monitor at least one contextual information relative to at least one user from said plurality of users; and
c) a recognition module able to use the monitoring results to identify the television viewer.

Advantageously, the identification system further comprises an external collector module for monitoring external information.

Advantageously, the identification system further comprises a personalization module for providing a personalized service to the identified television viewer.

For instance, the personalized service is a content recommendation service and/or a targeted advertising service.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

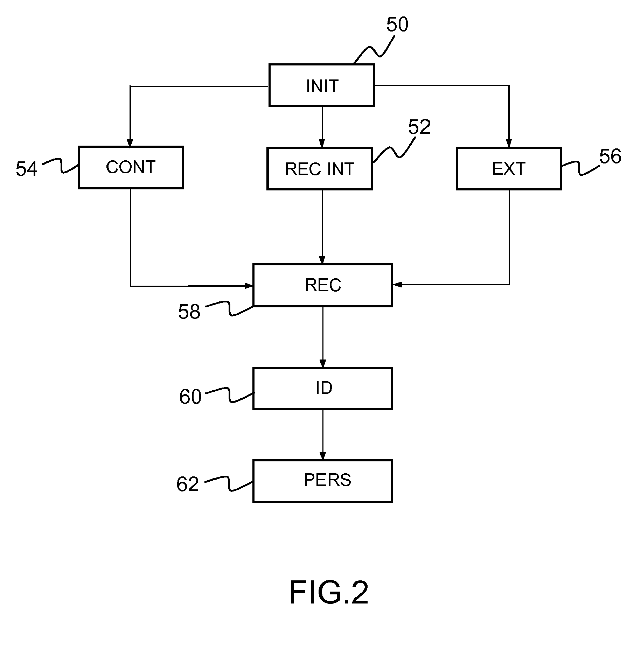

The invention thus provides a computer-readable program comprising computer-executable instructions to enable a computer to perform the identification method of the invention. The diagram of figure 2 illustrates an example of the general algorithm for such computer program.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 represents an example of an identification system according to an embodiment of the invention; and
- Figure 2 is a flowchart detailing the steps of the method of identification according to an embodiment of the present invention.

### DETAILED DESCRIPTION OF PREFERRED EMBODIMENTS

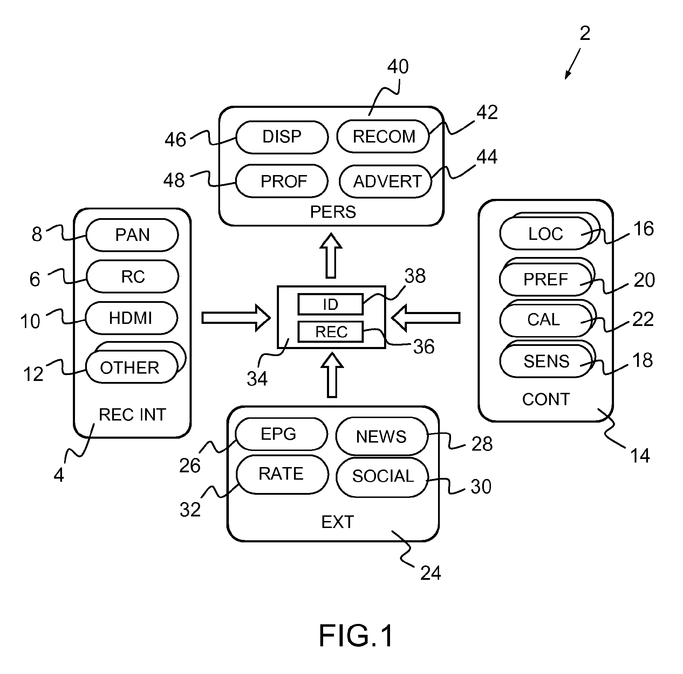

Referring to Figure 1, there is shown therein an identification system 2 of a television viewer, according to an embodiment of the invention.

In the following description, a home scenario is considered wherein a plurality of users, for instance family members, are associated with a television receiver, typically a set-top box. A communication means is also provided within the home to enable inter-device communication, using, for instance, Bluetooth, peer-to-peer, WiFi, etc. Preferably, this communication means is a wireless access point, such as a gateway. This gateway is preferably connected to the television receiver and to at least one smartphone.

The identification system 2 is able to identify the user, or group of users, that is currently watching the television. This user or group of users is called television viewer.

According to the illustrated embodiment, the identification system 2 comprises an interaction collector module 4 for monitoring the interactions of the television viewer with the television receiver.

More particularly, the interaction collector module 4 is able to capture the actions of the user on the interfaces of the television receiver or of the television display(s), for instance a television set and a second screen like a tablet, associated with the television receiver.

Preferably, the interaction collector module 4 is implemented within the television receiver. Thus, it can capture directly the actions of the television viewer done with a remote control 6 or through front panel buttons 8 of the television receiver. The interaction collector module 4 preferably captures these actions with their type and their time of achievement.

Concerning the actions of the user on the television display, many cases are possible.

If the television display is controlled through a HDMI interface 10, this means that any user action is done by the remote control 6 of the television receiver. Thus, the interaction collector module 4 can capture these actions directly.

If the television display is controlled by its own remote control or buttons interface 12, a local software agent implemented within the television display may capture these actions and send the collected information to the interaction collector module 4.

If the television display is controlled through a WI-FI connection by a personal mobile device, for instance the smartphone, by using a dedicated application installed in said mobile device, the viewer actions could be possibly captured by the application itself instead of having an agent in the set-top box or the television set. The control data issued from the personal mobile device may also be captured by an intermediate node, like the gateway, within the local network.

The identification system 2 further comprises a context module 14 for monitoring contextual information relative to the users of the television receiver.

This context module 14 may, for example, be implemented within the gateway or within the smartphone.

Such contextual information comprise information about the users locations 16. Different sensors 18 within the home may provide this information to the context module 14.

Besides, part of the information about a user location may be collected from the user's smartphone. Such information permit to know at least if the user is out of home and, therefore to deduce that he is not in front of his television. More accurate location information within the home may be captured using the sensors 18. For instance, home access control based on a unique identification system, like RFID (Radio Frequency Identification) for example, or face recognition at home entrance permits to the context module 14 to keep, at any moment, the list of people currently present at home.

Furthermore, in a smart home environment, the context module 14 can capture the lighting conditions and room temperatures and track the users preferences 20 regarding these parameters, on the basis of a long term monitoring for example.

According to an embodiment, the context module 14 comprises a software module able to collect the equipment activities within the home, for example using a Publish-Subscribe (PubSub) pattern.

Furthermore, the context module 14 is advantageously able to access and monitor the users electronic calendars 22. This monitoring provides information about the availability and activities of the users.

Besides, the context module 14 is preferably able to carry a long-term monitoring of the user habits.

Moreover, the identification system 2 comprises an external collector module 24 for monitoring external information, i.e. information provided by external sources.

These external sources comprise a television guide 26 and/or a news source 28 and/or a social network 30 and/or a television program rating source 32.

The identification system 2 also comprises an identification device 34.

The identification device 34 is, for example, the gateway. It may also be the smartphone.

The identification device 34 comprises a receiving module 36 for receiving the information collected by the interaction collector module 4, the context module 14 and the external collector module 24.

The identification device 34 also comprises a recognition module 38 for combining the received information to identify the television viewer. The recognition module 38 is able to identify the television viewer by using a conventional method like heuristics based on user actions patterns or a Dynamic Bayesian network to represent probabilistic relationships between the collected information and already built users profiles.

According to the illustrated embodiment, the identification system 2 further comprises a personalization module 40 for providing a personalized service to the identified viewer. This personalized service may be a content recommendation service 42 and/or a targeted advertising service 44.

The personalized service may also be a rendering service 46 for adapting the user interface, such as for example the display format, to the identified viewer.

The personalization module 40 preferably comprises a viewer profile module 48 able to update the television viewer profile on the basis of the collected information on the television viewer. Such information, in relation to TV usage, may be enriched from an existing user profile.

The flowchart of Figure 2 details the steps of the identification method according to an embodiment of the present invention.

According to this embodiment, a list of the users of the television receiver is maintained by the identification system 2, for instance in a memory of the identification device 34. This list is preferably built by the identification device 34 for example, through an explicit registration of each user. The list may be also provided by a database external to the identification system 2, for instance a smart home controller. This list may be updated further to a user's request, particularly when the identification system 2 fails to recognize the television viewer when said viewer is not in the list.

The television viewer identification method is initialized at step 50 when a viewer, comprising one or more users, is starting to watch television.

At step 52, all the viewer interactions with the television receiver and the associated display devices, such as the TV set, are monitored by the interaction collector module 4. The type, as for instance channel selection or channel up/down, and the time of achievement of the interactions are captured.

More particularly, the first action of the viewer way to launch the television service is captured. Indeed, a set-top box is often left in a standby state when it is unused. The users generally do not use the on/off button to start the television set or the set-top box but they rather prefer to select directly a television channel. Thus, this first selected channel may be helpful for the identification device 34 to identify who is controlling the set-top box. Indeed, a given user will generally select the same channel. For instance, a child will preferably switch on the television by selecting his preferred cartoon channel while his father will use the default "2" button because his hand anatomy places naturally his thumb there. A third person may systematically use the On/Off power button and then switch to a generalist channel.

Simultaneously, at step 54, the context module 14 monitors contextual information provided by different sources, like the smartphone, and sensors.

At the same time, at step 56, the external collector module 24 monitors external information provided by external sources, such as social networks and television guides.

At step 58, the interaction collector module 4, the context module 14 and the external collector module send the monitoring results to the identification device 34.

At step 60, the recognition module 38 combines all the received information to identify the television viewer.

According to an embodiment, the recognition module 38 associates the channel selections and channel zapping patterns with different users or category profiles already maintained within the identification device 34. A category may be, for instance, adult, teenager or child.

Besides, the recognition module 38 makes a correlation between the channel selection information provided by the interaction collector module 4 and the television guide information provided by the external collector module 24. The analysis of the television guide information, about the current and upcoming TV program, provides an indication concerning the viewer identity.

Furthermore, by knowing the location of each family member provided by the context module 14, the recognition module 38 can determine which user could be physically in front of the television. For instance, the occupancy of each room in the home may be known thanks to the data captured by the motion sensors which are used to control the home energy. The fact that some rooms are more dedicated to a particular person is taken into account for the recognition. For example, if it appears that the bedrooms of the children are occupied, the recognition module 38 may conclude that it is probable that the kids are not watching television.

Besides, the recognition module 38 uses the information provided from the users calendars 22 for the identification task. Thus, the availability and the other activities of the different family members are taken into account.

According to an embodiment, the recognition module 38 uses an already built profile of each user to compute a probability that said user is interested in the programs currently broadcasted on the selected television channel. For instance, when a user is watching the same program at the same time of a certain day in the week, the recognition module 38 may easily identify said user at this moment.

Furthermore, as television watching is often a default activity, using information about a user habits provided from the context module 14, the recognition module 38 knows at which moment in the day, in the week or in the year, said user prefers watching television.

The recognition module 38 further uses the external information provided by the external collector module to obtain a more accurate user profile and/or to enable a rapid and robust identification.

For example, the recognition module 38 is able to know which program is viewed on the currently selected television channel by the information issued from the television guide 26. Preferably, the recognition module 38 takes into account the programs which occur around the current time, as the viewer may have chosen this channel because he is interested by the current program or by another one which will start soon.

Besides, during a news program, the recognition module 38 may perform a speech-to-text conversion in order to extract some words which are then sent to a news search engine in order to recognize automatically the items which are presented during the news program and to compare them with the items of interest of the users specified in the already built profiles.

According to an embodiment, the recognition module 38 uses information from one or more social networks to estimate if a user could be interested by the current television program. Considering that the recommendations of a the user's friends are relevant, if the currently viewed television program is recommended, then the recognition module 38 deduces that the user is probably watching this program. Of course, if the user himself is communicating about the television program in the social network, the affection or disaffection expressed in the messages of the user can help the recognition module 38 for the viewer identification.

An example is presented in the following description.

Let's assume that the identification device gets the following information :
1. A motion sensor indicates that there is at least one person in the kitchen;
2. The induction table is "ON";
3. The fridge door has been recently open and closed;
4. The current time is 7.15 pm;
5. The children Peter and Jennifer are respectively 5 and 7 years old.

The above information allow to the recognition module 38 to deduce that an adult is currently cooking.

Besides, the identification device gets the following information:
6. The television set is "ON" and the current channel number is 5;
7. Jennifer is at her piano lesson, as indicated by the father's calendar.

The recognition module 38 can then conclude that Peter is currently watching a cartoon on channel 5.

At step 62, the identification device 34 sends the television viewer identification result to the personalization module 40.

The personalization module 40 may then offer a personalized service to the identified television viewer, for instance a content recommendation, a targeted advertizing or a personalized user interface.

Furthermore, at step 62, the viewer profile module 48 updates the television viewer profile on the basis of the collected information on the television viewer. This updating step may also be carried by the identification device 34.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed as a reference to the plural and vice versa.

A person skilled in the art will readily appreciate that various parameters disclosed in the description may be modified and that various embodiments disclosed and/or claimed may be combined without departing from the scope of the invention.

Indeed, although the description above considered that the identification device 34 is located in the home, said identification device may also be located outside the home, for example in an operator's server.

## Claims

1. Method of identification of a television viewer from a plurality of users of a television receiver, comprising:
a) monitoring (52) at least one interaction of the television viewer with the television receiver;
b) monitoring (54) at least one contextual information relative to at least one user from said plurality of users;
c) using (60) the results of said interaction monitoring and contextual information monitoring results to identify the television viewer.

2. Method of claim 1, wherein the step of monitoring the interaction comprises capturing at least one action of the television viewer on at least one interface of the television receiver and/or of a device associated to said television receiver.

3. Method of claim 2, wherein a sequence of actions of the television viewer is captured.

4. Method of any of claims 1 to 3, wherein the contextual information comprise information collected from at least one sensor and/or at least one user calendar

5. Method of any of claims 1 to 4, further comprising monitoring (56) external information.

6. Method of claim 5, wherein the external information comprise information provided by an external source of information, for example from a social network or a television guide.

7. Method of any of claims 1 to 6, further comprising building a profile of each user of the television receiver.

8. Method of claim 7, further comprising updating (62) the profile of the identified television viewer using the monitoring results.

9. Identification device (34) of a television viewer from a plurality of users of a television receiver, comprising :
a) a receiving module (36) able to receive information about at least one interaction of the television viewer with the television receiver and at least one contextual information relative to at least one user from said plurality of users;
b) a recognition module (38) able to use the received information to identify the television viewer.

10. Identification device of claim 9, said identification device being a smartphone.

11. Identification device of claim 9, said identification device being a gateway.

12. Identification system (2) of a television viewer from a plurality of users of a television receiver, comprising :
a) an interaction collector module (4) for monitoring at least one interaction of the television viewer with the television receiver;
b) a context module (14) for monitoring at least one contextual information relative to at least one user from said plurality of users; and
c) a recognition module (38) for using the monitoring results to identify the television viewer.

13. Identification system of claim 12, further comprising an external collector module (24) for monitoring external information.

14. Identification system of claim 12 or 13, further comprising a personalization module (40) for providing a personalized service to the identified television viewer.

15. Computer-readable program comprising computer-executable instructions to enable a computer to perform the method of any of claims 1 to 8.
